# EUROPEAN PATENT APPLICATION

(11) **EP 4 354 129 A1**
(43) Date of publication of application: **17.04.2024**
(21) Application number: 22204596.5
(22) Date of filing: 29.10.2022
(51) Int. Cl.: G01N 23/222, G01V 5/00

(54) **METHOD AND DEVICE FOR DETECTING EXPLOSIVE, AND COMPUTER READABLE STORAGE MEDIUM**

(30) Priority: 10.10.2022 CN 202211233307
(71) Applicant: China Institute of Atomic Energy, Beijing 102413 (CN)
(72) Inventor: WANG, Guobao, Beijing 102413 (CN); DOU, Yuling, Beijing 102413 (CN); FENG, Shuqiang, Beijing 102413 (CN)
(74) Representative: Stiel, Jürgen

(57) **Abstract**

Provided are a method for detecting an explosive, including: receiving a detection signal to generate a detection spectrum, wherein the detection spectrum is a spectrum of a gamma ray generated by a reaction between an object to be detected and neutrons; deducting a detection background in the detection spectrum to obtain a first processing spectrum; deducting a characteristic peak at a nickel peak position in the first processing spectrum to obtain a second processing spectrum; and determining whether the explosive is contained in the object to be detected, based on the second processing spectrum. A device for detecting an explosive and a computer readable storage medium are further provided.

## Description

### TECHNICAL FIELD

The present disclosure relates to a field of a neutron detection technology, in particular to a method and a device for detecting an explosive, and a computer readable storage medium.

### BACKGROUND

In some special places, such as a place with high density of people, it is often required to perform a detection of explosives to ensure safety. The neutron detection technology may be used for the detection of explosives to effectively improve an accuracy of the detection. However, a false detection may occur in some cases.

### SUMMARY

In view of the above problems, the present disclosure is proposed to provide a method and a device for detecting an explosive and a computer readable storage medium to overcome the above problems or at least partially solve the above problems.

According to a first aspect of embodiments of the present disclosure, a method for detecting an explosive is provided, including: receiving a detection signal to generate a detection spectrum, wherein the detection spectrum is a spectrum of a gamma ray generated by a reaction between an object to be detected and neutrons; deducting a detection background in the detection spectrum to obtain a first processing spectrum; deducting a characteristic peak at a nickel peak position in the first processing spectrum to obtain a second processing spectrum; and determining whether the explosive is contained in the object to be detected, based on the second processing spectrum.

According to a second aspect of embodiments of the present disclosure, a device for detecting an explosive is provided, including: a detection room configured to accommodate an object to be detected; a neutron source configured to emit neutrons into the detection room; a detection unit configured to detect a gamma ray generated by a reaction of the neutrons, so as to generate a detection signal; and one or more processors configured to: receive the detection signal to generate a detection spectrum, wherein the detection spectrum is a spectrum of a gamma ray generated by a reaction between the object to be detected and the neutrons; deduct a detection background in the detection spectrum to obtain a first processing spectrum; deduct a characteristic peak at a nickel peak position in the first processing spectrum to obtain a second processing spectrum; and determine whether the explosive is contained in the object to be detected, based on the second processing spectrum.

According to a third aspect of embodiments of the present disclosure, a computer readable storage medium having computer instructions stored thereon is provided, and the computer instructions, when executed by a computer, cause the computer to implement the method according to the first aspect of embodiments of the present disclosure.

The method and the device for detecting the explosive and the computer readable storage medium provided by embodiments of the present disclosure may be implemented to reduce a probability of a false determination during the detection of explosives.

### BRIEF DESCRIPTION OF THE DRAWINGS

FIG. 1 shows a flowchart of a method for detecting an explosive according to embodiments of the present disclosure;
FIG. 2 shows a schematic spectrum diagram obtained by performing a neutron detection on a blank sample, an explosive and a stainless steel;
FIG. 3 shows a schematic diagram of first calibration spectrums of a plurality of detection units before fitting is performed;
FIG. 4 shows a schematic diagram of first calibration spectrums of a plurality of detection units after fitting is performed; and
FIG. 5 shows a schematic diagram of a device for detecting an explosive according to embodiments of the present disclosure.

### DETAILED DESCRIPTION OF EMBODIMENTS

In order to make objectives, technical solutions and advantages of the present disclosure clearer, the technical solutions of the present disclosure will be clearly and completely described below with reference to the accompanying drawings of embodiments of the present disclosure. Obviously, the described embodiments are exemplary embodiments rather than all embodiments of the present disclosure. Based on the described embodiments of the present disclosure, all other embodiments obtained by those ordinary skilled in the art without inventive effort fall within the scope of protection of the present disclosure.

It should be noted that, unless otherwise defined, technical or scientific terms used in the present disclosure should have ordinary meaning as understood by those ordinary skilled in the art to which the present disclosure belongs. Descriptions such as "first" and "second" involved in the whole text are merely used to distinguish similar objects, and should not be construed as indicating or implying their relative importance or order or implicitly indicating a quantity of indicated technical features. It should be understood that data described by "first", "second", etc. may be interchanged under appropriate circumstances. Descriptions of "and/or" appearing in the whole text mean including three parallel solutions. For example, "A and/or B" may include solution A alone, solution B alone, or solution A and solution B.

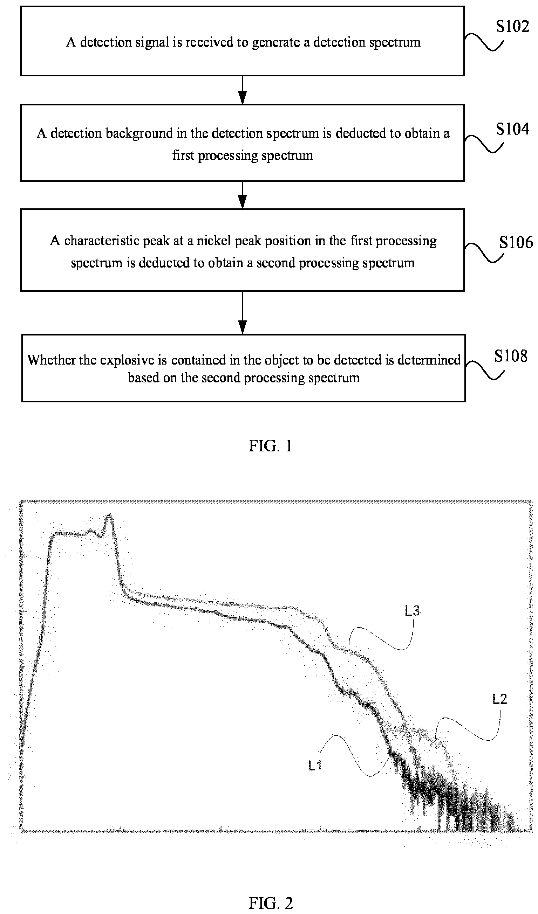

Embodiments of the present disclosure provide a method for detecting an explosive. Referring to FIG. 1, the method includes the following steps.

In step S102, a detection signal is received to generate a detection spectrum. The detection spectrum is a spectrum of a gamma ray generated by a reaction between an object to be detected and neutrons.

In step S104, a detection background in the detection spectrum is deducted to obtain a first processing spectrum.

In step S106, a characteristic peak at a nickel peak position in the first processing spectrum is deducted to obtain a second processing spectrum.

In step S108, whether the explosive is contained in the object to be detected is determined based on the second processing spectrum.

In step S102, as an example, the object to be detected may be placed in a neutron environment, such as a detection room installed with a neutron source, and then a gamma ray generated by a reaction between the object to be detected and neutrons may be detected by a detection unit to generate a detection signal. The detection unit here may refer to any suitable neutron detector in the art, such as a NaI(Tl) crystal scintillation detector. The detection signal generated by the detection unit is generally an analog signal. After the detection signal is received, it may be processed into a digital signal by an analog-to-digital converter, and then a spectrogram may be formed. In addition to the above methods, any suitable method may be used by those skilled in the art to obtain the detection spectrum, which is not limited here.

After the detection spectrum is obtained, step S104 may be performed to deduct the detection background in the detection spectrum to obtain the first processing spectrum. The detection background refers to a signal not to be measured detected by the detection unit, which is superposed with a signal to be measured. Due to an existence of cosmic rays and a natural radioactivity in an environment, a detection unit may generate a detection background, which may vary significantly with different sizes and types of detectors, and also vary with different shielding degrees around a detector. By deducing the detection background, an impact of environmental radiation and noise may be effectively reduced, so that the accuracy of the detection of explosives may be improved.

The detection background may be pre-demarcated. In some embodiments, the detection background may be determined by detecting a blank sample before the detection. For example, the detection may be performed without a sample, and the spectrum obtained in this case may be determined as the detection background. Other suitable methods may also be selected by those skilled in the art to determine the detection background, which is not limited here.

After the first processing spectrum is obtained, step S106 may be performed to deduct the characteristic peak at the nickel peak position in the first processing spectrum to obtain the second processing spectrum. During the detection of explosives, most of the objects to be detected that are wrongly determined as explosives are those with stainless steel outer packaging or internal stainless steel materials, such as insulation cups. It is proposed in the present disclosure that those objects to be detected may be wrongly determined because stainless steel materials contain nickel.

Specifically, referring to FIG. 2, spectrums obtained by performing a neutron detection on a blank sample, a stainless steel and an explosive are shown in FIG. 2, in which a curve L1 is a spectrum for the blank sample, a curve L2 is a spectrum for the explosive, and a curve L3 is a spectrum for the stainless steel sample. It may be observed that, compared with L1, L2 and L3 show a rise in energy, in which a reaction between nitrogen in the explosive and neutrons results in a characteristic peak of nitrogen in L2, and a reaction between nickel in the stainless steel and neutrons results in a characteristic peak of nickel in L3. The characteristic peak of nickel in L3 has a high energy, which is close to an energy of the characteristic peak of nitrogen in L2, so that the stainless steel may be wrongly detected as an explosive during the detection process.

In view of this, in embodiments of the present disclosure, the characteristic peak at the nickel peak position in the first processing spectrum is deducted to obtain the second processing spectrum, and then the detection of explosives is performed based on the second processing spectrum, so that an interference generated by a stainless steel material contained in the object to be detected may be eliminated, and a false determination may be reduced. The nickel peak position may be determined by pre-demarcation. A specific demarcation method may be selected by those skilled in the art according to actual situations, and the method for demarcating the nickel peak position may also be provided in the relevant parts below, which will not be described in detail here.

It may be understood that even if no stainless steel material is contained in the object to be detected, step S106 may still be performed to deduct the characteristic peak at the nickel peak position in the first processing spectrum, which may not affect a normal detection. Therefore, in embodiments of the present disclosure, it is not necessary to determine whether the object to be detected contains a stainless steel material to determine whether step S106 needs to be performed, which not only ensures the accuracy of detection but also ensures the efficiency of detection.

After the second processing spectrum is obtained, it is possible to determine whether the object to be detected is an explosive based on the second processing spectrum. Step S108 may be implemented by those skilled in the art with reference to neutron detection methods provided in a related art. For example, the second processing spectrum may be compared with a spectrum of the explosive to determine whether the object to be detected contains the explosive.

In some embodiments, it is possible to determine whether the object to be detected contains the explosive based on a characteristic peak at a nitrogen peak position and a characteristic peak at a chlorine peak position in the second processing spectrum. That is, whether the object to be detected contains the explosive may be determined by using a gamma ray generated by a reaction between nitrogen and neutrons and a gamma ray generated by a reaction between chlorine and neutrons. In the related art, the detection of explosives is generally performed only based on the characteristic peak at the nitrogen peak position. In embodiments of the present disclosure, the detection of explosives is performed based on the characteristic peak at the nitrogen peak position and the characteristic peak at the chlorine peak position, so that the accuracy of the detection may be further improved, a comprehensiveness of the detection may be ensured, and a risk of false determination may be reduced.

In some embodiments, the method for detecting the explosive may further include determining the detection background and the nickel peak position before detecting the object to be detected.

In some embodiments, as described above, the detection background may be determined by receiving the detection signal without the object to be detected being placed in the detection room. After the detection background is determined, the nickel peak position may be determined based on the iron peak position in the detection background.

It may be understood that the nickel peak position may be demarcated directly by detecting a stainless steel material. However, a direct demarcation of the nickel peak position may be interfered by other radiation. In embodiments of the present disclosure, it is proposed to demarcate the nickel peak position by using the iron peak position. The iron peak position basically coincides with the nickel peak position, and a demarcated iron peak position may be directly determined as the nickel peak position, or a peak position near the demarcated iron peak position may be determined as the nickel peak position. As the iron peak position may be demarcated with a small interference, it is possible to demarcate the nickel peak position more accurately by determining the nickel peak position based on the iron peak position, so as to improve the accuracy of the detection, and avoid an unnecessary interference to a detection result caused by an error in the demarcation of the nickel peak position.

In some embodiments, during the detection, a plurality of detection units may be provided to further improve the accuracy of the detection. Specifically, a plurality of detection signals of the plurality of detection units may be respectively received to generate a plurality of detection spectrums, then the detection background in each detection spectrum may be deducted respectively to obtain a plurality of first processing spectrums, and the characteristic peak at the nickel peak position in each first processing spectrum may be deducted to obtain a plurality of second processing spectrums, and finally whether the explosive is contained in the object to be detected may be determined based on the plurality of second processing spectrums.

It should be noted that since the plurality of detection units are provided in different positions, their respective detection backgrounds and nickel peak positions may be different. Therefore, it is necessary to respectively determine the detection background and the nickel peak position of each detection unit before the detection. During the detection, a detection spectrum of each detection unit is processed by respective detection background and nickel peak position to obtain the first processing spectrum and the second processing spectrum.

In some embodiments, a calibration of the detection unit is required before the detection of explosives is performed. The calibration of the detection unit may ensure the accuracy of the detection signal obtained by the detection unit, so as to improve the accuracy of the detection of explosives.

In some embodiments, the calibration of the detection unit may specifically include: receiving the detection signal of the detection unit without the object to be detected being placed in the detection room, so as to generate a first calibration spectrum and a second calibration spectrum, and then calibrating the detection unit based on the first calibration spectrum and the second calibration spectrum.

In such embodiments, the first calibration spectrum is a spectrum of a gamma ray generated by a reaction between a shielding unit of the detection room and neutrons, and the second calibration spectrum is a spectrum of a gamma ray generated by a reaction between a packaging material of the detection unit and neutrons.

It may be understood that, in order to ensure that neutrons may be concentrated in the detection room without generating a radiation to outsides, it is required to provide a shielding unit for the detection room. The shielding unit may be made of polyethylene, boron-containing polyethylene or other materials. The gamma ray generated by the reaction between the shielding unit and neutrons may have a certain impact on the detection signal of the detection unit. In addition, the detection unit needs to be provided in a packaging material, which may form a protective layer to avoid a neutron radiation so as to ensure a durability of the detection unit. Similarly, the gamma ray generated by the reaction between the packaging material and neutrons may also have a certain impact on the detection signal of the detection unit. Therefore, in such embodiments, the detection unit is calibrated based on the first calibration spectrum and the second calibration spectrum, so as to ensure the accuracy of the detection signal of the detection unit to a greatest extent.

As an example, the detection unit may be calibrated based on an energy corresponding to a typical characteristic peak in the first calibration spectrum and the second calibration spectrum. For example, a shielding material of the shielding unit generally contains a large amount of hydrogen elements. Therefore, in an embodiment, the calibration may be performed using a characteristic peak of hydrogen in the first calibration spectrum, which corresponds to an energy of 2.23 MeV. The packaging material of the detection unit generally contains iron. Therefore, in an embodiment, the calibration may be performed using a characteristic peak of iron in the second calibration spectrum, which corresponds to an energy of 7.6 MeV.

In some embodiments, as described above, the plurality of detection units are provided in different positions, which may result to non-uniform relationships between channel addresses and energies of the plurality of detection units, so that a large amount of computation is required in a subsequent process of determining whether the explosive is contained in the object to be detected based on the second processing spectrums corresponding to the plurality of detection units.

In order to facilitate an analysis of the second processing spectrums of the plurality of detection units, in such embodiments, a fitting may be performed on the detection signal of each detection unit based on the first calibration spectrum corresponding to each of the plurality of detection units before the detection is performed. A purpose of performing a fitting on the detection signal is to unify the relationships between the channel addresses and energies of the plurality of detection units into a specific relationship, so that an energy spectrum curve measured by each detection unit may be shown in a same coordinate system to facilitate a subsequent analysis of a result.

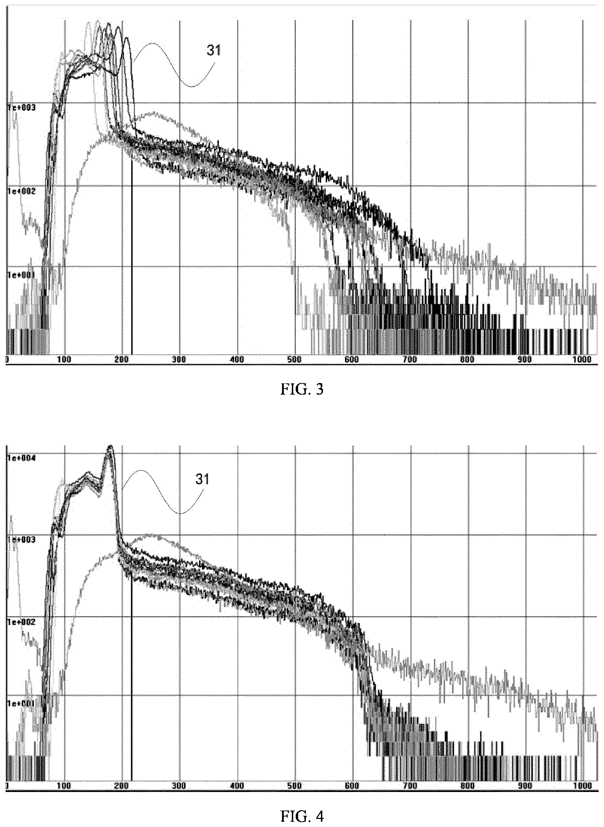

Specifically, referring to FIG. 3 and FIG. 4, FIG. 3 shows a schematic diagram of the first calibration spectrums of the plurality of detection units before fitting is performed, and FIG. 4 shows a schematic diagram of the first calibration spectrums of the plurality of detection units after fitting is performed. As an example, a fitting may be performed on the plurality of detection units based on the characteristic peaks in the first calibration spectrums, such as the characteristic peaks of hydrogen. In the first calibration spectrums obtained by the detection units in FIG. 3, hydrogen peaks 31 have different positions, while in FIG. 4, after the fitting is performed, the hydrogen peaks 31 in the first calibration spectrums obtained by the detection units are located substantially have a same position.

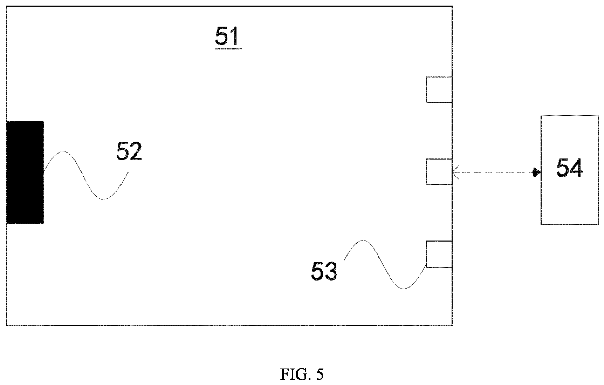

In some other embodiments, a characteristic peak in other spectrums, not limited to the first calibration spectrum or the hydrogen peak in the first calibration spectrum, may be selected by those skilled in the art to perform a fitting on the plurality of detection units. Embodiments of the present disclosure further provide a device for detecting an explosive. Referring to FIG. 5, the device includes: a detection room 51 used to accommodate an object to be detected; a neutron source 52 used to emit neutrons into the detection room 51; a detection unit 53 used to detect a gamma ray generated by a reaction of the neutrons, so as to generate a detection signal; and one or more processors 54. The one or more processors 54 may be used to: receive the detection signal to generate a detection spectrum, which is a spectrum of a gamma ray generated by a reaction between the object to be detected and the neutrons; deduct a detection background in the detection spectrum to obtain a first processing spectrum; deduct a characteristic peak at a nickel peak position in the first processing spectrum to obtain a second processing spectrum; and determine whether the explosive is contained in the object to be detected, based on the second processing spectrum.

The neutron source 52 may be provided on a wall of the detection room 51, and the detection unit 53 may be provided on other one or more walls of the detection room 51. A specific setting mode of the neutron source 52 and the detection unit 53 may be selected by those skilled in the art according to actual situations, which is not specifically limited here.

The neutrons emitted by the neutron source 52 may be 2.5 MeV fast neutrons. A moderator may be provided between the neutron source 52 and a position where the object to be detected is placed, so that the neutrons reaching the object to be detected become thermal neutrons. In some embodiments, the neutron source 52 may be provided with a position adjustment device, a collimation device, or the like, so that the neutrons emitted by the neutron source 52 may be concentrated at a preset position of the object to be detected. In some embodiments, during the detection, an initial detection may be performed on the object to be detected to determine a suspicious region in which an explosive may be contained, and then the neutrons emitted by the neutron source 52 may be concentrated in the suspicious region to perform the detection, so as to further improve the accuracy of the detection and avoid an impact of other interfering objects.

A NaI(Tl) crystal scintillation detector may be used for the detection unit 53. Specifically, each detection unit 53 may be provided with three cable connectors, including a high-voltage electrical connector for connecting a power supply of photoelectric multiplication, a preamplifier voltage connector arranged on a detector housing, and a signal connector of a preamplifier module. As described above, the detection unit 53 may be provided in the packaging material to increase a service life. The packaging material may form a protective layer, for example, the packaging material may be a stainless steel material coated with a LiF protective layer. In some embodiments, a thermocouple or other heating devices may be provided for the detection unit 53 in order to ensure that the detection unit 53 may operate normally at a low temperature. In some embodiments, a cooling fan or other cooling devices may be provided for the detection unit 53 in order to ensure that the detection unit 53 may operate normally at a high temperature. In some embodiments, as described above, a plurality of detection units 53 may be provided.

In some embodiments, the device for detecting the explosive may be further provided with a conveyor unit (not shown in FIG. 5), which may be a conveyor belt, a mechanical arm or other devices. The conveyor unit may send the object to be detected into the detection room 51 and move the object to be detected out of the detection room 51, so that a plurality of objects to be detected may be detected continuously.

In some embodiments, as described above, the device for detecting the explosive may be provided with a shielding unit, which may prevent the neutrons in the detection room 51 from leaking out, and further prevent a radiation in an external environment from interfering with a detection environment in the detection room 51. The shielding unit may be made of polyethylene, boron-containing polyethylene, or other suitable neutron shielding materials, which is not specifically limited here.

The one or more processors 54 may be electrically connected to the detection unit 53, and the one or more processors 54 may be used to implement the method for detecting the explosive described in any of the embodiments described above.

In some embodiments, the one or more processors are further used to receive the detection signal without the object to be detected being placed in the detection room, so as to determine the detection background and the nickel peak position. In some embodiments, the one or more processors 54 are specifically used to determine the nickel peak position based on an iron peak position in the detection background. As described above, the nickel peak position may be more accurately determined by the iron peak position, so that the accuracy of the detection result may be improved.

It should be noted that during a continuous detection of a plurality of objects to be detected, it is only required to determine the detection background and the nickel peak position once before the detection is performed, and the detection background and the nickel peak position may be directly used in the subsequent detection process.

In some embodiments, the one or more processors are further used to calibrate the detection unit, and/or perform a fitting on the detection signals of the plurality of detection units. For the specific calibration methods and fitting methods, reference may be made to the description in the relevant parts above, which will not be described in detail here. Similarly, during a continuous detection of a plurality of objects to be detected, it is only required to perform the calibration and the fitting on the detection units once before the detection is performed.

In some embodiments, the detection device may further include an indicator unit, which may be used to indicate a detection result of the one or more processors 54. For example, the indicator unit may include a display, which may indicate different detection results with different colors, or the indicator unit may include a speech indicator apparatus, which may indicate different detection results with speech.

Embodiments of the present disclosure further provide a computer readable storage medium having computer instructions stored thereon. The computer instructions may be executed by a computer to implement the method for detecting the explosive described in any of the embodiments described above.

In the specification, the "computer readable storage medium" may be any device that may contain, store, communicate, propagate or transmit programs for use by or in conjunction with an instruction execution system, devices or apparatus. More specific examples (non-exhaustive list) of the computer readable medium may include: an electrical connector (electronic device) with one or more wires, a portable computer disk box (magnetic device), a random access memory (RAM), a read-only memory (ROM), an erasable programmable read only memory (EPROM or flash memory), an optical fiber device, and a portable compact disk read only memory (CDROM). In addition, the computer readable medium may even be a paper or other suitable medium on which the program may be printed, because the program may be obtained electronically, for example, by optical scanning of the paper or other medium, then editing, interpreting, or processing in other suitable manners when necessary, and then stored in a computer memory.

It should be understood that each part of the present disclosure may be implemented in hardware, software, firmware, or a combination thereof. In the embodiments described above, a plurality of steps or methods may be performed using software or firmware stored in a memory and executed by a suitable instruction execution system. For example, if the steps or methods are performed by hardware, then same as in other embodiments, the steps or methods may be performed by any one of the following technologies known in the art, including a discrete logic circuit with a logic gate circuit for performing a logic function on a data signal, a special integrated circuit with a suitable combined logic gate circuit, a programmable gate array (PGA), a field programmable gate array (FPGA), or the like, or a combination thereof.

Those skilled in the art may understand that all or some of the steps carried by the implementation of the above described methods may be performed by instructing related hardware through a program. The program may be stored in a computer readable storage medium. When being executed, the program includes one or a combination of the steps of the method embodiments.

In addition, various functional units in various embodiments of the present disclosure may be integrated in a processing module, or each unit may exist physically independently, or two or more units may be integrated in a module. The integrated module may be implemented in a form of hardware or a form of software function module. When being implemented in the form of software functional module and sold or used as an independent product, the integrated modules may also be stored in a computer readable storage medium.

It may be understood that that the above embodiments are exemplary and should not be construed as limiting the present disclosure. Those ordinary skilled in the art may make changes, modifications, replacements and transformations on the above embodiments within the scope of the present disclosure.

## Claims

1. A method for detecting an explosive, comprising:
receiving a detection signal to generate a detection spectrum, wherein the detection spectrum is a spectrum of a gamma ray generated by a reaction between an object to be detected and neutrons;
deducting a detection background in the detection spectrum to obtain a first processing spectrum;
deducting a characteristic peak at a nickel peak position in the first processing spectrum to obtain a second processing spectrum; and
determining whether the explosive is contained in the object to be detected, based on the second processing spectrum.

2. The method according to claim 1, wherein the determining whether the explosive is contained in the object to be detected, based on the second processing spectrum comprises:
determining whether the explosive is contained in the object to be detected, based on a characteristic peak at a nitrogen peak position and a characteristic peak at a chlorine peak position in the second processing spectrum.

3. The method according to claim 1, further comprising:
determining the detection background and the nickel peak position before detecting the object to be detected.

4. The method according to claim 3, wherein the determining the detection background and the nickel peak position comprises:
receiving the detection signal without the object to be detected being placed in a detection room, so as to determine the detection background; and
determining the nickel peak position based on an iron peak position in the detection background.

5. The method according to claim 1, wherein the receiving a detection signal to generate a detection spectrum comprises: receiving a plurality of detection signals respectively from a plurality of detection units, so as to generate a plurality of detection spectrums;
the deducting a detection background in the detection spectrum to obtain a first processing spectrum comprises: deducting the detection background in each of the detection spectrums respectively, so as to obtain a plurality of first processing spectrums;
the deducting a characteristic peak at a nickel peak position in the first processing spectrum to obtain a second processing spectrum comprises: deducting the characteristic peak at the nickel peak position in each of the first processing spectrums respectively, so as to obtain a plurality of second processing spectrums; and
the determining whether the explosive is contained in the object to be detected, based on the second processing spectrum comprises: determining whether the explosive is contained in the object to be detected, based on the plurality of second processing spectrums.

6. The method according to claim 5, further comprising:
determining the detection background and the nickel peak position of each of the detection units respectively, before detecting the object to be detected.

7. The method according to claim 5, further comprising:
calibrating the detection unit before detecting the object to be detected.

8. The method according to claim 7, wherein the calibrating the detection unit comprises:
receiving a detection signal of the detection unit without the object to be detected being placed in a detection room, so as to generate a first calibration spectrum and a second calibration spectrum, wherein the first calibration spectrum is a spectrum of a gamma ray generated by a reaction between a shielding unit of the detection room and neutrons, and the second calibration spectrum is a spectrum of a gamma ray generated by a reaction between a packaging material of the detection unit and neutrons; and
calibrating the detection unit based on the first calibration spectrum and the second calibration spectrum.

9. The method according to claim 8, further comprising:
performing a fitting on the detection signals of the plurality of detection units based on the first calibration spectrums respectively corresponding to the plurality of detection units, before detecting the object to be detected.

10. A device for detecting an explosive, comprising:
a detection room (51) configured to accommodate an object to be detected;
a neutron source (52) configured to emit neutrons into the detection room (51);
a detection unit (53) configured to detect a gamma ray generated by a reaction of the neutrons, so as to generate a detection signal; and
one or more processors (54) configured to:
receive the detection signal to generate a detection spectrum, wherein the detection spectrum is a spectrum of a gamma ray generated by a reaction between the object to be detected and the neutrons;
deduct a detection background in the detection spectrum to obtain a first processing spectrum;
deduct a characteristic peak at a nickel peak position in the first processing spectrum to obtain a second processing spectrum; and
determine whether the explosive is contained in the object to be detected, based on the second processing spectrum.

11. The device according to claim 10, wherein the one or more processors (54) are further configured to:
receive the detection signal without the object to be detected being placed in the detection room (51), so as to determine the detection background and the nickel peak position.

12. The device according to claim 11, wherein the one or more processors (54) are further configured to: determine the nickel peak position based on an iron peak position in the detection background.

13. A computer readable storage medium having computer instructions stored thereon, wherein the computer instructions, when executed by a computer, cause the computer to implement the method according to any one of claims 1 to 9.
